# EUROPEAN PATENT SPECIFICATION

(11) **EP 0 558 283 B1**
(45) Date of publication and mention of the grant of the patent: **15.11.1995**
(21) Application number: 93301346.8
(22) Date of filing: 24.02.1993
(51) Int. Cl.: F16D 55/14

(54) **Improvements in self-energising disc brakes**
Scheibenbremsen mit Selbstverstärkung
Freins à disques à autoserrage

(30) Priority: 28.02.1992 GB 9204282
(43) Date of publication of application: 01.09.1993
(73) Proprietor: LUCAS INDUSTRIES PUBLIC LIMITED COMPANY, Solihull, West Midlands B91 3TX (GB)
(72) Inventor: Price, Anthony George, Cwmbran, Gwent NP44 2EY, Wales (GB); Taylor, Michael Anthony, Gilwern, Gwent NP7 0AS, Wales (GB)
(74) Representative: Spall, Christopher John

(56) References cited:
- DE-U- 9 105 349
- US-A- 1 989 179

## Description

This invention relates to self-energising disc brakes of the kind known for example from DE-U-9105349 in which rotatable friction discs provided with linings of friction material are adapted to be brought into engagement with spaced opposed braking surfaces in housing by pressure plates located between the friction discs and centered by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart, due to the tendency for the balls or rollers to ride up ramps defined by the recesses, and into engagement with the friction discs, which, in turn, are urged into engagement with the braking surfaces, and the pressure plates are carried round with the friction discs in one direction of forward or reverse rotation until one pressure plate is arrested by the engagement of a lug on that plate with a drag-taking stop abutment in the housing, the continued angular movement of the other pressure plate providing a servo action for that direction of disc rotation.

Self-energising brake discs of the kind set forth may be dry or they may be of the liquid cooled type, and such brakes are commonly used in tractors and like vehicles and are hereinafter called brakes of the kind set forth.

In a brake of the kind set forth actuating means comprising an assembly of the two pressure plates and the balls or rollers has a tendency to adopt a substantially central position within the housing in an off position of brake.

This results in a clearance or gap being present between the drag-taking stop abutment and the lug on the pressure plate which is adapted to co-operate with it when the brake is applied. Centralisation is most likely to occur when parasitic drag between the braking faces is low, a condition designed into brakes of the kind set forth in order to minimise power loss at low temperature. The large running clearances between friction discs and the pressure plates reduce parasitic drag almost to zero at high temperatures when, in liquid cooled brakes, the viscosity of the liquid is low. The clearance or gap between the drag-taking stop abutment and each respective lug is a function of tolerances, running clearances and lining wear and it increases with further brake adjustment to take account of these factors.

If the brake is actuated and the linings engage and produce rotation of the actuator from a substantially central position, an audible "clonk" may result, the sound caused by the brake actuator assembly being angularly accelerated such that the lug on the respective pressure plate impacts against the drag-taking stop abutment. The amplitude of this sound is a function of the magnitude of the clearance or gap, rotational speed, the rate of application of the brake, and the mass of the actuator. The amplitude of "clonk" is therefore highly variable.

According to our invention in a self-energising disc brake of the kind set forth drag generating means are provided to generate a drag force in an off position of brake of a magnitude sufficient to carry the pressure plates round with the discs through an angular distance sufficient for the lug on the said one plate to cooperate with the drag-taking stop abutment for a given direction of disc rotation.

This therefore eliminates the clearance between the lug and the drag-taking stop abutment for either the forward or reverse directions of disc rotation. Since no clearance has to be taken up when the brake is applied, any tendency for sound to be emitted during brake operation due to the engagement between the lug and the drag-taking abutment is thus eliminated.

The useful drag in the off position of brake is controlled to drive the actuator gently into abutment contact from low rotational speed and then maintain the gap or clearance at zero for that direction of disc rotation.

The drag generating means may act to urge relatively rotatable braking members into light engagement in order to generate sufficient drag to carry the pressure plates round with the disc.

Preferably the drag generating means comprises at least one spring arranged to apply an axially directed force to the braking members. Under a light spring force, therefore, a small clamping pressure can be exerted on two or more of the braking faces. This will generate a drag force and rotate the actuator into torque abutment engagement in either forward or reverse directions of rotation, for subsequent braking.

The clamping pressure is adapted to be held at a minimum value necessary to rotate the actuator and so avoid wear and heat generation.

In one construction a spring acts between rotatable discs on opposite sides of the pressure plates. In such a construction the spring may comprise a compression spring which surrounds and rotates with a shaft to be braked and acts between the two rotatable discs with and between which the pressure plates cooperate. Alternatively at least one light tension spring co-operates between the two plates to urge them towards each other.

When a stack of alternate rotatable and stationary friction discs, known as stators and rotors, are located between the pressure plates and the braking surfaces in the housing, at least one light spring may act on or between a pair of friction discs. In one such construction at least one spring, comprising a tension spring, acts to urge a pair of stators on opposite sides of the pressure plates towards each other, and the tension spring is disposed outside the peripheral edge of the rotors and the pressure plates. In an alternative construction the tension spring acts to urge towards each other a pair of rotors on opposite sides of a stator.

In another construction the spring comprises a compression spring housed in one end of the housing and acting on an adjacent stack of friction members through the outer most stator of the stack.

Some embodiments of our invention are illustrated in the accompanying drawings in which:-
Figure 1 is a view along the axis of a shaft of a self-energising disc brake;
Figure 2 is a transverse section through the brake;
Figure 3 is a section similar to Figure 2 but showing a modification;
Figure 4 is a section similar to Figure 2 but showing a modification;
Figure 5 is a section similar to Figure 2 but showing a further modification;
Figure 6 is a view along the axis of a shaft of another brake; and
Figure 7 is a transverse section through the brake.

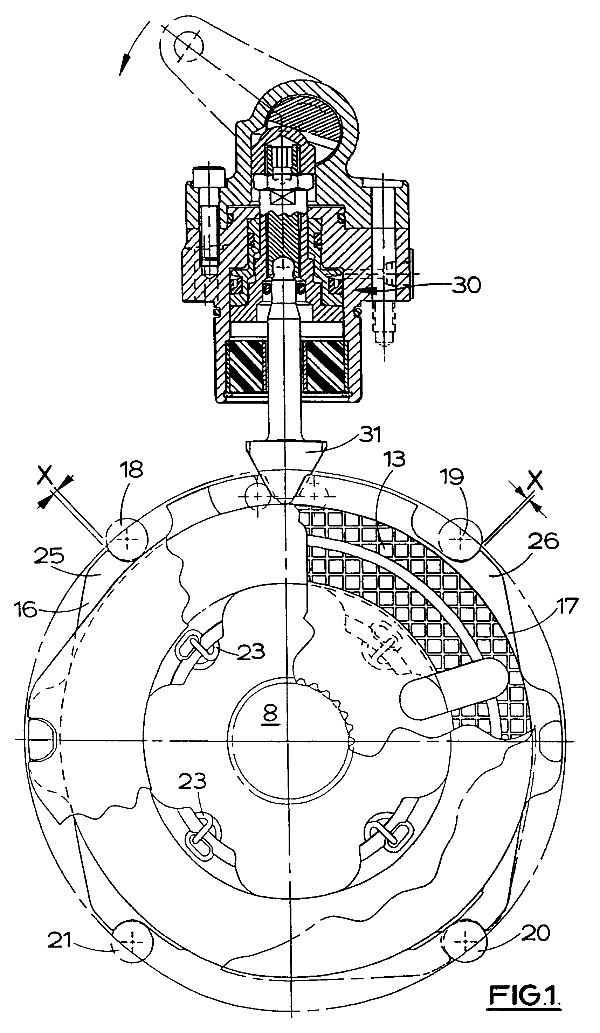

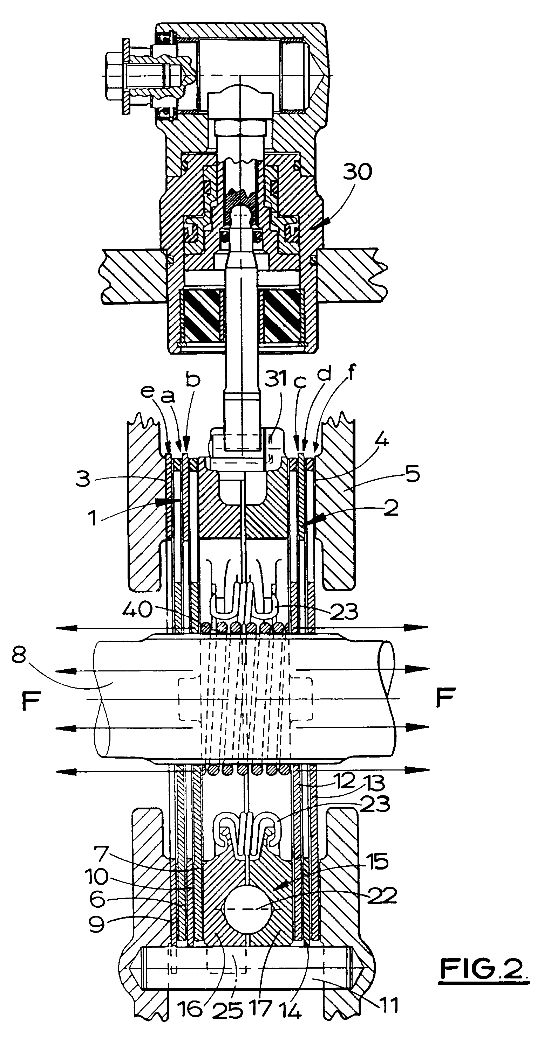

The brake illustrated in Figures 1 and 2 of the drawings is of a conventional spreading type in which two stacks 1 and 2 of friction discs are located between spaced opposed braking surfaces 3,4 in opposite ends of a housing 5. The stack 1 of discs comprises two rotatable friction discs 6, 7 constituting rotors and which are slidably splined on a rotatable shaft 8, a non-rotatable discs 9 constituting a stator which is keyed to the housing against rotation by means of at least one transverse pin 11, and a disc 10 which is keyed to the pressure plate 16. The other stack 2 of discs comprises inner and outer rotors 12, 13, also slidably splined to the shaft, and a disc 14 disposed between the two rotors and keyed to the pressure plate 17.

An actuator assembly 15 is located in the housing between the innermost rotors 7, 12 of the respective stacks 1 and 2. The actuator assembly 15 comprises pressure plates 16, 17 which are centered by angularly spaced stationary pilots comprising transverse pins 18, 19, 20, 21. Balls 22 are located in cooperating oppositely inclined recesses in the adjacent faces of the pressure plates 16, 17 and angularly spaced tension springs 23 act to urge the two pressure plates 16, 17 towards each other with the balls 22 located in the recesses at the inner ends of ramps defined by the sides of the recesses.

The application of the brake is initiated by moving the pressure plates 16, 17 angularly in opposite directions which causes the pressure plates 16, 17 to move axially relatively away from each other due to the tendency for the balls 22 to ride up the ramps defined by the sides of the recesses. This urges the rotors and stators of each stack, 1, 2 into engagement with each other and with the opposed braking surfaces 3, 4 in the housing 5. The pressure plates 16, 17 are then carried round with the rotors 6, 7, 12, 13 until one is arrested by the engagement of a lug 25 or 26, on a respective plate 16, 17 with a drag-taking abutment constituted by the pin 18 or the pin 19, according to the direction of rotation of the shaft 8. Continued angular movement of the other plate with the rotors 6, 7, 12, 13 provides a servo-action, which is enhanced to a multi-servo action by the disc 10 or 14 also being carried round with the servo pressure plate.

Angular movement of the pressure plates 16, 17 in opposite directions is initiated by means of an hydraulic actuator 30 of known construction having a wedge 31 which separates adjacent ends of the two pressure plates 16, 17 as the wedge is displaced radially in an inward direction.

A compression spring 40 surrounding the shaft 8 acts at opposite ends against the rotors 7 and 12 to apply a light force to these rotors in order to apply a small clamping force to the discs of the two stacks 1 and 2 the compression spring 40 rotates with the shaft 8 and with the rotors 7 and 12.

When the brake is in an off position and the shaft is rotating the force "F" generates a small drag between the faces of adjacent plates at a, b, c, and d, to provide four faces of useful drag. The drag has the effect of moving the actuator assembly 50 angularly according to the direction of shaft rotation so that the lug 25 or 26 is held in light abutment with its respective drag-taking abutment pin 18 or 19. Thus any gap or clearance "X" which normally would exist between the lugs and the respective drag-taking abutments when the actuator assembly 15 is centralised in a normal "off" position of brake is taken up. Thus the operation of the brake is silent and any tendency for an audible "clonk" to be produced is avoided.

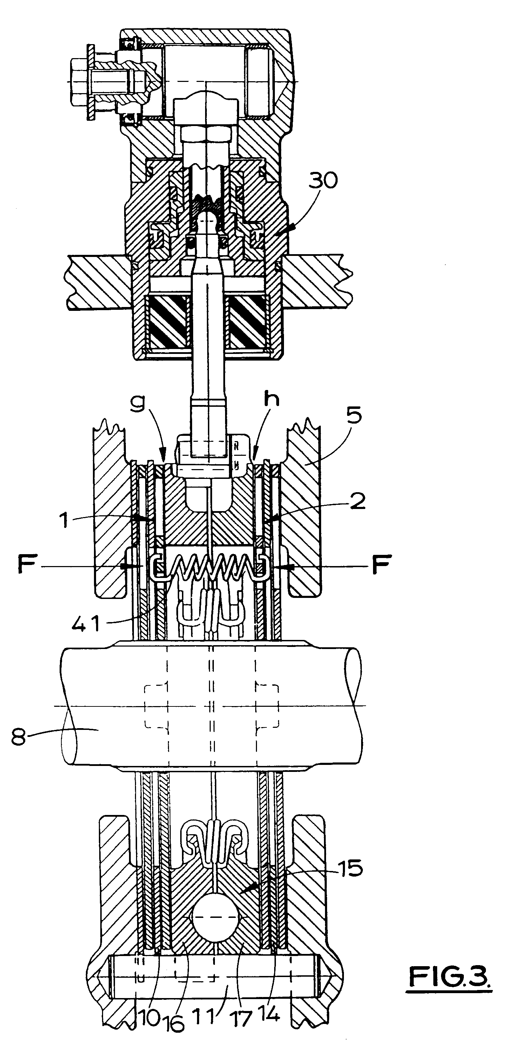

In the modification shown in Figure 3 of the drawings the compression spring 40 is replaced by a tension spring 41 which couples the two rotors 7 and 12 together and urges them towards each other. In this construction the force F from the spring 41 generates a small useful drag between faces at g and h between the rotors 7 and 12 and the pressure plates 16 and 17.

Several angularly spaced springs similar to the spring 41 may be incorporated in the brake.

The construction and operation of the brake of Figure 3 is otherwise the same of that of Figures 1 and 2 and corresponding reference numerals have been applied to corresponding parts.

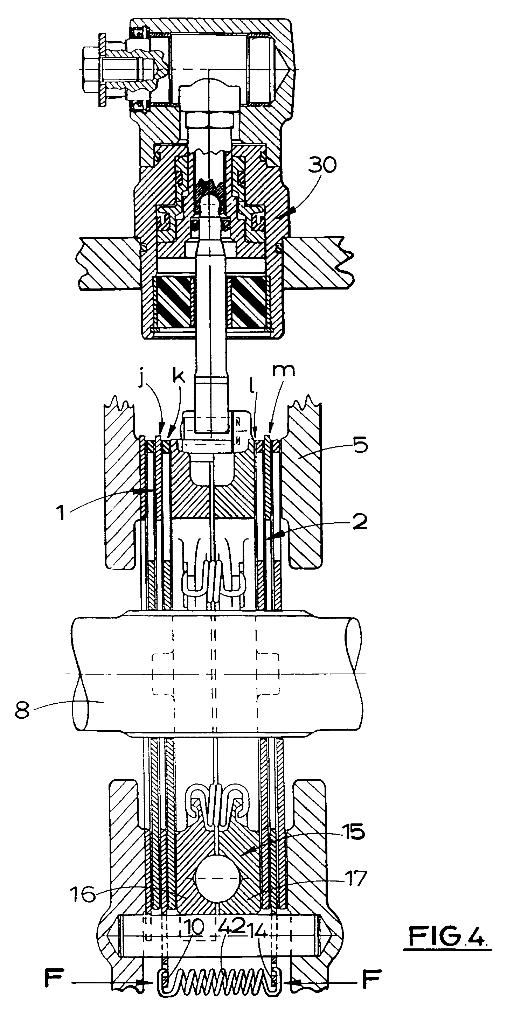

In the modified construction illustrated in Figure 4 a light tension spring 42 acts between intermediate discs 10, 14 of the two stacks 1, 2 to generate small useful drag between the faces at j, k, l, m, when the discs 10, 14 are keyed to the respective pressure plates 16 and 17.

When the discs 10 and 14 are not keyed to the pressure plates 16 and 17 in a single servo brake, useful drag will be generated between the two faces of j and m only.

A plurality of light tension springs, similar to the spring 42, may be incorporated with the springs lying outside the peripheral edges of the pressure plates 16, 17.

The construction and operation of the brake of Figure 4 is otherwise the same as that of Figures 1 and 2 and corresponding reference numerals have been applied to corresponding parts.

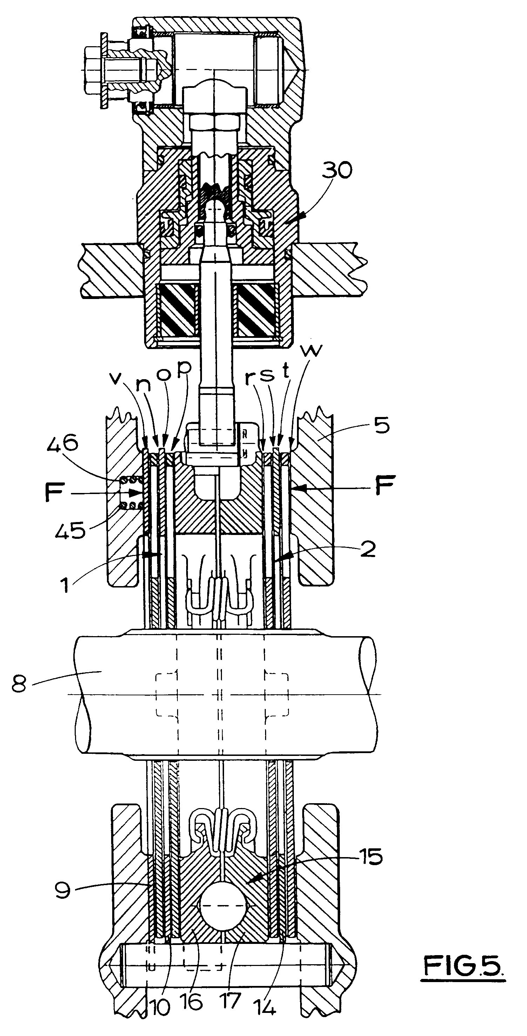

In the brake illustrated in Figure 5 of the drawings a compression spring 45 housed in a recess 46 in the wall of the housing 5 comprising the braking face 3 acts on the discs of the stack 1 through the adjacent, external, stator 6. Small useful drag is provided between faces at n, o, p, r, s, t.

When the discs 10 and 14 are not keyed to the pressure plates 16 and 17 in a single servo brake, useful drag will be generated between the two faces p and r only.

In a modification a plurality of compression springs similar to the spring 46 may be provided in the inner wall of the housing at angularly space positions.

The construction and operation of the brake illustrated in Figure 5 of the drawings is otherwise the same as that of Figures 1 and 2 and corresponding reference numerals have been applied to corresponding parts.

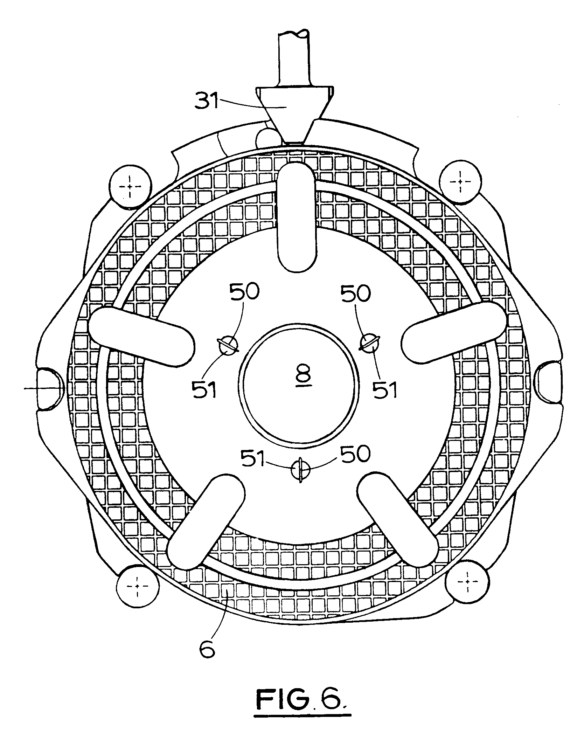

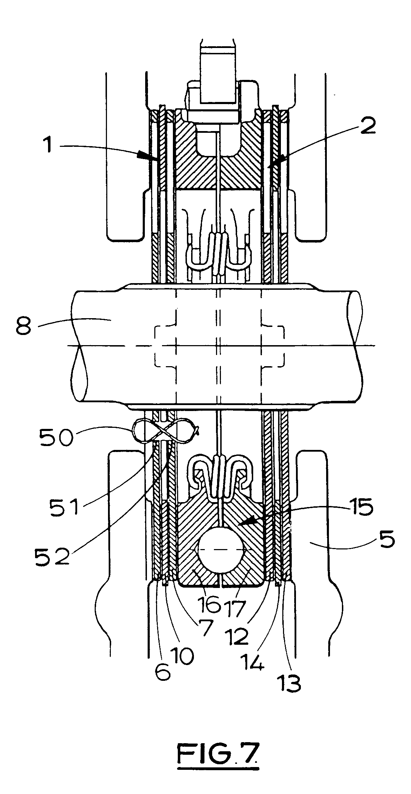

In the brake illustrated in Figures 6 and 7 of the drawings, the outer stator 9 is omitted from the stack 1, and the two rotors 6, 7 of that stack are coupled by angularly spaced tension springs 50. Each spring 50 is of "Figure 8" configuration and is passed through axially aligned openings 51, 52 in the two rotors so that they are urged axially towards each other with a light force in order to generate a useful drag when the shaft 8 is rotatably in a "brake-off" position.

When the discs 10 and 14 are not coupled to the respective pressure plates, no useful drag will be produced.

The construction and operation of the brake of Figures 6 and 7 is otherwise the same as that of Figures 1 and 2 and corresponding reference numerals have bee applied to corresponding parts.

## Claims

1. A self-energising disc brake in which rotatable friction discs (6,7,12,13) provided with linings of friction material are adapted to be brought into engagement with spaced opposed braking surfaces (3,4) in housing (5) by pressure plates (16,17) located between the friction discs and centered by stationary pilot lugs (18,19,20,21), balls or rollers (22) are located in co-operating oppositely inclined recesses in the adjacent faces of the pressure plates (16,17), and the application of the brake is initiated by moving the pressure plates (16,17) angularly in opposite directions, the pressure plates then moving apart, due to the tendency for the balls or rollers (22) to ride up ramps defined the recesses, and into engagement with the friction discs, which, in turn, are urged into engagement with the braking surfaces (3,4), and the pressure plates (16,17) are carried round with the friction discs (6,7,12,13) in one direction of forward or reverse rotation until one pressure plate is arrested by the engagement of a lug (25 or 26) on that plate with a drag-taking stop abutment (18 or 19) in the housing, the continued angular movement of the other pressure plate providing a servo action for that direction of disc rotation, characterised in that drag generating means are provided to generate a drag force in an off position of brake of a magnitude sufficient to carry the pressure plates (16,17) round with the discs through an angular distance sufficient for the lug (25 or 26) on the said one plate to co-operate with the drag-taking stop abutment (18 or 19) for a given direction of disc rotation.

2. A brake according to Claim 1 characterised in that the drag generating means urge relatively rotatable braking members (5,6,7,9,10,12,13,14,16 or 17) into light engagement.

3. A brake according to Claims 1 and 2 characterised in that braking faces (a,b,c,d) of the braking members are brought into light engagement under the action of a small clamping pressure adapted to be held at a minimum value necessary to rotate a brake actuator assembly (15) in order to avoid wear and heat generation.

4. A brake according to Claim 3 characterised in that the clamping means comprises at least one spring (40,41,42,45 or 50) which is arranged to apply an axially directed component of force (F) to the braking members (5,6,7,9,10,12,13,14,16 or 17).

5. A brake according to Claim 4 characterised in that the spring (41,42,45 or 50) is one of several angularly spaced similar springs incorporated in the brake.

6. A brake according to Claim 4 characterised in that the axially directed component of force (F) produced by the spring generates the necessary drag force between the faces (a,b,c,d) of adjacent friction discs to cause any gap or clearance (X) which would normally exist between the lugs (25,26) and the respective drag-taking stop abutments (18,19) when the actuator assembly (15) is centralised in a normal off position to be eliminated.

7. A brake according to Claim 6 characterised in that the spring comprises a compression spring (40) which surrounds and rotates with a shaft (8) to be braked, said spring acting between two rotatable discs (7,12) with and between which the pressure plates (16,17) co-operate.

8. A brake according to Claim 6 characterised in that the spring comprises a tension spring (41 or 50) which co-operates between two rotatable friction discs (7,12, or 6,7) to urge the two discs axially towards one another with a light force.

9. A brake according to Claim 6 in which a stack (1 or 2) of alternate stators and rotors is located between the pressure plates (16,17) and each of the opposed braking surfaces (3,4) in the housing (5), characterised in that the spring comprises a light tension spring (42) which acts to urge a pair of stators (10,14) on opposite sides of the pressure plates (16,17) towards each other, the tension spring (42) being disposed outside the peripheral edge of the rotors (7,12) and the pressure plates (16,17).

10. A brake according to Claim 6 in which a stack (1 or 2) of alternate stators and rotors is located between the pressure plates (16,17) and each of the opposed braking surfaces (3,4) in the housing (5), characterised in that the spring comprises a compression spring (45) housed in one end of the housing (5) and acting on an adjacent stack of friction discs through the outermost stator (9) of the stack.

## Patentansprüche

1. Selbstverstärkende Scheibenbremse, bei der drehbare, mit Belägen aus Reibmaterial versehene Reibscheiben (6, 7, 12, 13) an im Abstand angeordnete, einander zugewandte Bremsflächen (3, 4) in einem Gehäuse (5) mittels Druckplatten (16, 17) anlegbar sind, die zwischen den Reibscheiben angeordnet und durch stationäre Führungen (18, 19, 20, 21) zentriert sind, Kugeln bzw. Rollen (22) in zusammenwirkenden, entgegengesetzt geneigten Vertiefungen in den benachbarten Flächen der Druckplatten (16, 17) angeordnet sind und das Anlegen der Bremse eingeleitet wird, indem die Druckplatten (16, 17) in entgegengesetzten Richtungen um einen Winkel bewegt werden, wodurch sich die Druckplatten dann, da die Kugeln bzw. Rollen (22) dazu neigen, an durch die Vertiefungen gebildeten Rampen hochzusteigen, auseinanderbewegen und sich an die Reibscheiben anlegen, die ihrerseits in Anlage an den Bremsflächen (3, 4) gedrängt werden, und die Druckplatten (16, 17) von den Reibscheiben (6, 7, 12, 13) in einer Richtung der Vorwärts- bzw. Rückwärtsdrehung mitgenommen werden, bis eine Druckplatte durch Anstoßen einer Nase (25 bzw. 26) dieser Platte an einem mitnahmekraftaufnehmenden Anschlag (18 bzw. 19) des Gehäuses angehalten wird, wobei durch die fortgesetzte Winkelbewegung der anderen Druckplatte eine Servowirkung für diese Richtung der Scheibendrehung geschaffen wird, dadurch gekennzeichnet, daß eine mitnahmekrafterzeugende Einrichtung vorgesehen ist, die in einer Ruhestellung der Bremse eine Mitnahmekraft von einer Größe erzeugt, die ausreicht, um die Druckplatte (16, 17) mit den Scheiben über einen Winkelabstand mitzunehmen, der ausreicht, damit die Nase (15 bzw. 26) auf der besagten einen Platte mit dem mitnahmekraftaufnehmenden Anschlag (18 bzw. 19) für eine bestimmte Drehrichtung der Scheibe zusammenwirken kann.

2. Bremse nach Anspruch 1,
dadurch gekennzeichnet, daß die mitnahmekrafterzeugende Einrichtung gegeneinander drehbare Bremskörper (5, 6, 7, 9, 10, 12, 13, 14, 16 bzw. 17) in leichte Anlage drängt.

3. Bremse nach den Ansprüchen 1 und 2,
dadurch gekennzeichnet, daß Bremsflächen (a, b, c, d) der Bremskörper unter der Wirkung eines geringen Zuspanndrucks in leichte Anlage gebracht werden, der auf einem zum Drehen einer Bremsbetätigungseinrichtung (15) erforderlichen Mindestwert gehalten werden kann, um Verschleiß und Wärmeerzeugung zu verhindern.

4. Bremse nach Anspruch 3,
dadurch gekennzeichnet, daß die Zuspanneinrichtung wenigstens eine Feder (40, 41, 42, 45 bzw. 50) aufweist, die eine axial gerichtete Kraftkomponente (F) auf die Bremskörper (5, 6, 7, 9, 10, 12, 13, 14, 16 bzw. 17) ausübt.

5. Bremse nach Anspruch 4,
dadurch gekennzeichnet, daß die Feder (41, 42, 45 bzw. 50) eine von mehreren, im Winkel zueinander beabstandeten ähnlichen Federn ist, die in die Bremse eingebaut sind.

6. Bremse nach Anspruch 4,
dadurch gekennzeichnet, daß die durch die Feder erzeugte axial gerichtete Kraftkomponente (F) die erforderliche Mitnahmekraft zwischen den Flächen (a, b, c, d) benachbarter Reibscheiben erzeugt, um einen beliebigen Spalt bzw. Abstand (X) zu eliminieren, der normalerweise zwischen den Nasen (15, 16) und den jeweiligen mitnahmekraftaufnehmenden Anschlägen (18, 19) bestünde, wenn die Betätigungseinrichtung (15) in einer normalen Ruhestellung zentriert ist.

7. Bremse nach Anspruch 6,
dadurch gekennzeichnet, daß die Feder eine Druckfeder (40) umfaßt, die eine zu bremsende Welle (8) umgibt und sich mit dieser dreht, wobei diese Feder zwischen zwei drehbaren Scheiben (7, 12) wirkt, mit und zwischen denen die Druckplatten (16, 17) zusammenwirken.

8. Bremse nach Anspruch 6,
dadurch gekennzeichnet, daß die Feder eine Zugfeder (41 bzw. 50) zwischen zwei drehbaren Reibscheiben (7, 12 bzw. 6, 7) aufweist, die mit den beiden Scheiben zusammenwirkt, um sie mit einer geringen Kraft axial zueinander zu drängen.

9. Bremse nach Anspruch 6, bei der zwischen den Druckplatten (16, 17) und jeder der einander zugewandten Bremsflächen (3, 4) im Gehäuse (5) ein Stapel (1 bzw. 2) sich abwechselnder Statoren und Rotoren angeordnet ist,
dadurch gekennzeichnet, daß die Feder eine Feder mit schwacher Zugkraft (42) umfaßt, die zwei Statoren (10, 14) an einander zugewandten Seiten der Druckplatten (16, 17) zueinander drängt, wobei die Druckfeder (42) außerhalb des Umfangsrandes der Rotoren (7, 12) und der Druckplatten (16, 17) angeordnet ist.

10. Bremse nach Anspruch 6, bei der zwischen den Druckplatten (16, 17) und jeder der einander zugewandten Bremsflächen (3, 4) im Gehäuse (5) ein Stapel (1 bzw. 2) sich abwechselnder Statoren und Rotoren angeordnet ist,
dadurch gekennzeichnet, daß die Feder eine Druckfeder (45) aufweist, die in einem Ende des Gehäuses (5) angeordnet ist und durch den äußersten Stator (9) des Stapels auf einen benachbarten Stapel Reibscheiben wirkt.

## Revendications

1. Frein à disques à auto-activation, dans lequel des disques de friction rotatifs (6, 7,12,13), pourvus de garnitures formées d'un matériau de friction, sont adaptés pour être amenés en prise avec des surfaces de freinage opposées, espacées (3,4) dans un carter (5) par des plateaux de pression (16,17) disposés entre les disques de friction et centrés par des pattes de pilotage stationnaires (18,19,20,21), des billes ou des rouleaux (22) sont logés dans des évidements coopérants inclinés en sens opposés, formés dans les faces adjacentes des plateaux de pression (16,17) et le serrage du frein est enclenché par déplacement angulaire des plateaux de pression (16,17) dans des sens opposés, les plateaux de pression s'écartant ensuite l'un de l'autre, du fait de la tendance des billes ou des rouleaux (22) à se déplacer sur des rampes définies par les évidements, jusqu'au contact avec les disques de friction qui sont à leur tour forcé à venir en contact avec les surfaces de freinage (3,4), et les plateaux de pression (16,17) sont entraînés avec les disques de friction (6,7,12, 13), dans un sens de rotation vers l'avant ou vers l'arrière jusqu'à ce qu'un plateau de pression soit arrêté par l'entrée en contact d'une patte (25 ou 26) prévue sur ce plateau avec une butée d'arrêt à absorption de trainée (18 ou 19) prévue dans le carter, la poursuite du mouvement angulaire de l'autre plateau de pression produisant une action d'asservissement dans ce sens de rotation du disque, caractérisé en ce qu'il est prévu des moyens générateurs de traînée pour produire, dans une position de desserrage du frein, une force de traînée d'une grandeur suffisante pour que la patte (25 ou 26) prévue sur le premier plateau cité coopère avec la butée d'arrêt avec absorption de traînée (18 ou 19) dans un sens donné de rotation du disque.

2. Frein selon la revendication 1, caractérisé en ce que les moyens générateurs de traînée amènent en léger contact mutuel des éléments de freinage (5,6,7,9,10,12, 13,14,16 ou 17) pouvant tourner relativement.

3. Frein selon les revendications 1 et 2, caractérisé en ce que des faces de freinage (a,b,c,d) des éléments de freinage sont amenées en léger contact mutuel sous l'action d'une petite pression de serrage adaptée pour être maintenue à une valeur minimale nécessaire pour faire tourner un ensemble d'actionnement de frein (15) afin d'éviter une usure et une génération de chaleur.

4. Frein selon la revendication 3, caractérisé en ce que les moyens de serrage comprennent au moins un ressort (40,41,42,45 ou 50) qui est agencé pour appliquer une composante de force (F), dirigée axialement, aux éléments de freinage (5,6,7,9,10,12,13,14,16 ou 17).

5. Frein selon la revendication 4, caractérisé en ce que le ressort (41,42,45 ou 50) est l'un de plusieurs ressorts semblables, espacés angulairement et incorporés dans le frein.

6. Frein selon la revendication 4, caractérisé en ce que la composante de force (F) dirigée axialement qui est produite par le ressort engendre la force de traînée nécessaire entre les faces (a,b,c,d) de disques de friction adjacents pour éliminer un intervalle ou jeu (X) qui existerait normalement entre les pattes (25,26) et les butées d'arrêt avec absorption de traînée respectives (18,19) quand l'ensemble d'actionnement (15) est centré dans une position normale de désactivation.

7. Frein selon la revendication 6, caractérisé en ce que le ressort comprend un ressort de compression (40) qui entoure un arbre (8) à freiner et tourne avec lui, ledit ressort agissant entre deux disques rotatifs (7,12) avec qui et entre lesquels les plateaux de pression (16,17) coopèrent.

8. Frein selon la revendication 6, caractérisé en ce que le ressort comprend un ressort de tension (41 ou 50) qui intervient entre deux disques de friction rotatifs (7,12 ou 6,7) pour solliciter axialement les deux disques l'un vers l'autre avec une petite force.

9. Frein selon la revendication 6, dans lequel une pile (1 ou 2) de stators et rotors alternés est disposée entre les plateaux de pression (16,17) et chacune des surfaces de freinage opposées (3,4) prévues dans le carter (5), caractérisé en ce que le ressort comprend un léger ressort de tension (42) qui agit de façon à solliciter l'un vers l'autre deux stators (10,14) situés sur des côtés opposés des plateaux de pression (16,17), le ressort de tension (42) étant situé à l'extérieur du bord périphérique des rotors (7,12) et des plateaux de pression (16,17).

10. Frein selon la revendication 6, dans lequel une pile (1 ou 2) de stators et rotors alternés est disposée entre les plateaux de pression (16,17) et chacune des surfaces de freinage opposées (3,4) prévues dans le carter (5), caractérisé en ce que le ressort comprend un ressort de compression (45) engagé dans une extrémité du carter (5) et agissant sur une pile adjacente de disques de friction par l'intermédiaire du stator (9) situé le plus à l'extérieur dans la pile.
